# EUROPEAN PATENT APPLICATION

(11) **EP 4 498 459 A1**
(43) Date of publication of application: **29.01.2025**
(21) Application number: 23187789.5
(22) Date of filing: 26.07.2023
(51) Int. Cl.: H01M 8/1018, C25B 1/02, C25B 11/081, C25B 11/091, H01M 4/92, H01M 4/90, H01M 8/10

(54) **OXYGEN EVOLUTION REACTION CATALYST AND METHOD FOR ITS PREPARATION**

(71) Applicant: Johnson Matthey Public Limited Company, London EC4A 4AB (GB)
(72) Inventor: The designation of the inventor has not yet been filed
(74) Representative: Johnson Matthey Plc

(57) **Abstract**

The specification describes a process for preparing an oxygen evolution reaction catalyst, comprising the steps of: (i) combining iridium powder and a peroxide salt to produce a powder mixture; (ii) carrying out thermal treatment on the powder mixture; (iii) dissolving the product from (ii) in water to produce a solution; (iv) reducing the pH of the solution from (iii) to affect a precipitation and form a solid and a supernatant; (v) separating the solid from the supernatant; and (vi) drying the solid. An oxygen evolution catalyst obtainable by the method is also described.

## Description

### Technical field

The present invention relates to iridium-containing oxygen evolution reaction (OER) catalysts and a method for their preparation.

### Background art

Oxygen evolution reaction (OER) catalysts are an important component of fuel cells and water electrolysers. The OER reaction in acidic conditions is approximated by the following equation:

2H₂O → O₂ + 4H⁺ + 4e⁻

Iridium oxide catalysts are widely used for this reaction. Despite being widely referred to as "iridium oxide", most "iridium oxide" catalysts are more likely a mixture of oxidic iridium species such as IrO₂, Ir₂O₃ and/or IrO(OH)₂. For that reason "iridium oxide" is often referred to as IrOx.

OER catalysts used in a fuel cell or water electrolyser should ideally have a good activity per gram of iridium and should also have high stability under operation conditions of the fuel cell or water electrolyser. IrOx catalysts can be prepared in various degrees of crystallinity ranging from essentially amorphous to highly crystalline.

The article "Synthesis and Optimisation of IrO2 Electrocatalysts by Adams Fusion Method for Solid Polymer Electrolyte Electrolysers" Micro and Nanosystems 2012, 4, 186-191 describes the preparation of iridium dioxide using the Adams fusion method. The Adams fusion method involves the fusion of a metal chloride precursor with sodium nitrate in air at elevated temperature and has been used to prepare various noble metal oxides. In this paper H₂IrCl₆ an NaNO₃ were combined in isopropanol, the isopropanol is removed by heating in an oven and the resulting catalyst precursor/salt mixture was then reacted in a preheated furnace. The obtained metal oxide was then cooled, washed with ultrapure water to remove excess NaNOs and then dried in an oven at 100 °C. Amorphous iridium oxide was obtained in all cases. A peak assigned to the (101) reflection of IrO₂ at 2θ ~ 34-35° was seen in all samples.

The article "Iridium Oxide for the Oxygen Evolution Reaction: Correlation between Particle Size, Morphology, and the Surface Hydroxo Layer from Operando XAS" Chem. Mater. 2016, 28, 6591-6604 describes the preparation of iridium oxide by an Adams fusion method. The method uses Ir(acac)₃ as a raw material and by the use of a chloride-free synthesis chloride contamination of the product is avoided.

The article "Assessing the Potential of Co-Pt Bronze for Electrocatalysis in Acidic Media" Catalysis 2018, 8, 258 describes comparative testing of Co-Pt bronzes against a relatively crystalline iridium oxide and a relatively amorphous iridium oxide, the latter being sold as product number 43396 under the brand Premion^{®} by Alfa Aesar.

EP3214206A1 describes a catalytically active material for the electrochemical oxidation of water which comprises an amorphous Ir-oxohydroxide with a S_{BET} of ≥ 50 m²/g. A method is also described for producing the material, involving the steps of microwave-assisted thermal treatment of a basic solution of an Ir(III) or Ir(IV) complex, where the basic solution comprises hydroxide ions in a ratio satisfying 50 : 1 > hydroxide : Ir (mol/mol) ≥ 1 : 100.

US2020/087164A1 describes a material comprising iridium and/or iridium oxide (IrO₂), the material is microporous and is in the form of micron or sub-micron spheres. It is preferred that the material is amorphous. A method is also described for producing the material, involving the steps of (i) preparing an aqueous solution or suspension comprising at least one iridium precursor and at least one porogen or pore-forming agent chosen from organic polymers and copolymers and one of their mixtures; (ii) atomizing the aqueous solution or suspension from step (i) to form solid composite beads; and (iii) calcining the solid composite beads.

WO2022/102580A1 describes an iridium oxide material in which the peak intensity ratio of the (110) peak / (101) peak is 0.65 or less. The (110) peak is at 2θ = 28° ± 1° and the (101) peak is at 2θ = 35° ± 1°. A method is also described for preparing the material, which involves preparing a suspension of iridium nanoparticles or a solution of an iridium compound, and treating the resulting suspension or solution with high-temperature and high-pressure water.

WO2022/047103A1 describes an OER catalyst comprising a mixture of IrO₂ and LislrO4 phases, having reflections in its XRD pattern at 2θ = 18° and 43° for Li₃IrO₄ and at 2θ = 28° and 54° for IrO₂, and having a N₂-BET surface area of ≥ 50 m²/g. Also described is a method for manufacturing the catalyst involving a precipitation reaction from a solution comprising an iridium salt and a lithium salt.

There is a need for alternative OER catalysts having a good balance between catalyst activity and operational stability, which can be manufactured by a route which is scalable. The route should ideally also avoid the use of expensive iridium salts which are used in many known syntheses of iridium OER catalysts.

### Summary of the invention

In a first aspect the invention provides a method process for preparing an oxygen evolution reaction catalyst, comprising the steps of:
(i) combining iridium powder and a peroxide salt to produce a powder mixture;
(ii) carrying out thermal treatment on the powder mixture;
(iii) dissolving the product from (ii) in water to produce a solution;
(iv) reducing the pH of the solution from (iii) to affect a precipitation and form a solid and a supernatant;
(v) separating the solid from the supernatant; and
(vi) drying the solid.

A benefit of the method is that iridium powder is used as a raw material rather than iridium salts which are used in many previously described syntheses of OER catalysts. Iridium powder is generally less expensive than iridium salts. The avoidance of iridium salts, and particularly chloride salts, means that the product can be produced with very low chloride impurities. Chloride contamination in the product may affect the catalytic properties and performance due to the possibility of catalytic chloride evolution which is competitive with the OER at low pH.

A further benefit of this method is that, by control of the fusion step (ii) and/or by carrying out a filtration between steps (iii) and (iv), it is possible to produce a product which is free from iridium metal. Iridium is believed to be inactive in the OER, so material made by this method may be able to achieve comparable OER activity using lower loadings of total iridium. Iridium may also dissolve under typical conditions of CCM operation which is undesirable.

This method produces an OER catalyst which has a good balance between activity and stability.

The method may include a subsequent step of incorporating the catalyst into a catalyst-coated membrane. The method may also include a subsequent step of incorporating the catalyst-coated membrane into a fuel cell or water electrolyser.

By appropriately selecting the material used to contain the powder mixture during step (ii), the resulting product can be made with very low contaminants of transition metals. Some transition metals, particularly copper, chromium and cobalt, are known to catalyse the formation of oxidizing species which can damage the membrane of a CCM (see the article "A comparative study of several transition metals in Fenton-like reaction systems at circum-neutral pH" Acta Chim. Slov. 2003, 50, 619-632) and the avoidance of these metals is particularly advantageous.

In a second aspect the invention provides an oxygen evolution reaction catalyst, wherein:
the catalyst exhibits a single maxima in its XRD spectrum in the region 2θ = 25-38°;
the catalyst has a BET surface area of 10-40 m²/g;
the content of any individual transition metal, other than iridium, is 0-600 ppm is 0-600 ppm when measured by inductively coupled plasma mass spectrometry (ICP-MS).

The OER catalyst according to the second aspect of the invention has particular utility in water electrolysis and fuel cell applications, for example as part of a catalyst coated membrane for a fuel cell or water electrolyser.

In a third aspect of the invention there is provided a catalyst coated membrane comprising an OER catalyst according to the second aspect.

In a fourth aspect of the invention there is provided a fuel cell or water electrolyser comprising a catalyst coated membrane according to the third aspect.

### Description of the Figures

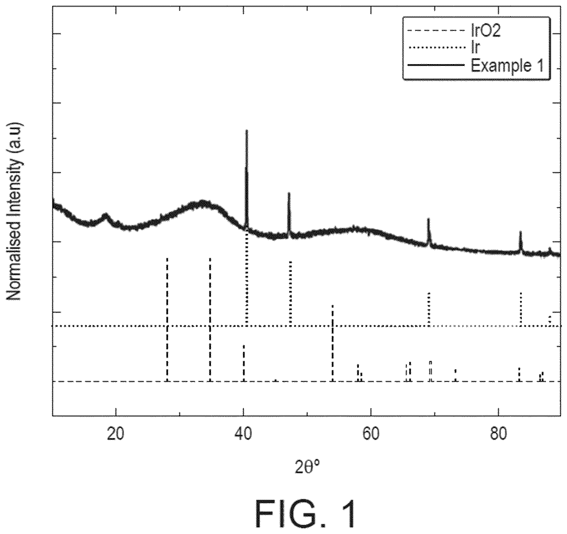

Figure 1 shows the X-ray diffraction (XRD) spectrum of the material from Example 1 compared with database values for iridium and iridium dioxide.

### Detailed description

Any sub-headings are for convenience only and are not intended to limit the invention.

### Raw materials and mixing - step (i)

The term "powder" used in connection with iridium powder is intended to encompass both spherical powders and also irregular powders such as iridium sponge.

The role of the peroxide salt is to oxidize the iridium powder. In preferred embodiments the peroxide salt is a Group I or Group II peroxide salt, preferably a Group I peroxide salt. Preferred salts are sodium peroxide and barium peroxide as these are commercially available. Sodium peroxide is particularly preferred.

The molar ratio of Ir : peroxide salt should preferably be 1 : ≥ 3. At molar ratios of 1 : < 3 conversion was not sufficient. While there is no particular upper limit on the equivalents of peroxide salt, too large an excess of peroxide salt should be avoided on the grounds of process safety, cost, and to avoid contamination of the product with metal ions from the peroxide salt. It is preferred that the molar ratio of Ir : peroxide salt is 1 : 4 to 1 : 10, preferably of 1 : 6 to 1: 9.

### Fusion - step (ii)

In step (ii) a thermal treatment is carried out on the mixture of iridium and peroxide salt (hereafter "powder mixture"); this is referred to herein as the fusion step. The product of this step is believed to be a mixture of oxidic species, including iridium dioxide and metal iridates (M₂IrO₃ (M⁺) and MIrO₃ (M²⁺)).

The fusion between iridium powder and sodium peroxide itself is known and described in the article "Chemical Dissolution of Iridium Powder Using Alkali Fusion Followed by High-Temperature Leaching" Materials Transactions Vol. 52, No. 11 (2011) pp. 2067-2070. In this reference iridium powder and sodium peroxide are combined at a molar ratio of Ir : Na₂O₂ ranging from 1 : 0.8 to 1 : 2.0 using a planetary ball mill using zirconia balls. The milled material was transferred to a nickel crucible and heated in air in an electric furnace at a temperature of either 500 or 600 °C for either 4 or 24 h. Although this reference describes the fusion of iridium powder and sodium peroxide, and leaching of iridium from the resulting fused product, it does not describe the isolation of an OER catalyst.

A variety of different heating techniques may be used for the fusion step.

In one method the fusion step is carried out in a static oven or static furnace. In this technique the power mixture is held within a container (e.g. a tray) within the oven or furnace.

In an alternative method the fusion step is carried out using a belt furnace. In this technique the powder mixture is held within a container (e.g. a tray) and is passed through the furnace by means of a belt. The furnace may be designed for single or multi-zone operation. Belt furnaces are available commercially.

In an alternative method the fusion step is carried out using a rotary calciner. A rotary calciner typically comprises a rotating drum which is externally heated. The use of rotary calcination is preferred over the use of a static oven, static furnace or belt furnace because rotary calcination mixes the powder which helps to ensure a uniform distribution of heat, which is thought to be beneficial for achieving high conversion of the iridium. If the process is operated continuously then the drum may be inclined to control the residence time of the powder within the drum. Rotary calciners are available commercially.

The applicant has found that under the oxidizing conditions of step (ii) it is possible for the metals at the surface of the equipment used to contain the powder mixture to contaminate the product. The presence of certain transition metals in the OER catalyst should ideally be avoided because they may catalyse the formation of OH and O₂H radicals which can in turn cause defects in the CCM and reduce the lifetime of the CCM. Contamination of the product can be avoided by appropriate selection of the material used to contain the powder mixture. By "used to contain the powder mixture" we mean the surface of any equipment which comes into contact with the powder mixture during the fusion step. For instance, in the case of a static oven, static furnace or belt furnace, contamination of the product can be avoided by using a tray in which at least the surface of the tray which contacts the powder mixture is made of a suitably selected material. In the case of a rotary calciner the inner surface of the drum is made of a suitably selected material.

In one preferred embodiment the material used to contain the powder mixture is a metal oxide. A preferred material is aluminium oxide.

In one preferred embodiment the material used to contain the powder mixture is a stainless steel. A preferred stainless steel is a chromium-nickel-molybdenum austenitic stainless steel. A particularly preferred stainless steel contains 16.0-18.0 wt% Cr, 10.0-14.0 wt% Ni, 2.00-3.00 wt% Mo, 0.08 wt% C, 2.00 wt% Mn, 0.045 wt% P, 0.03 wt% S, 0.75 wt% Si, 0.1 wt% N balance Fe; this steel is often referred to as type 316.

The powder mixture is heated at a temperature and duration suitable to achieve the desired conversion of iridium metal to oxidic species. It will be appreciated that the temperature and duration may differ depending on the choice of equipment used and the scale. The skilled person will be able to determine suitable conditions for a given equipment and scale.

### Dissolution - step (iii)

The mixture from step (ii) is typically left to cool to room temperature and is then dissolved or dispersed in water, preferably deionised water (DI). The solution turns deep blue immediately. It is preferred that the mixture is stirred to ensure full dissolution of soluble iridium species; stirring for 30 mins is normally sufficient. Dissolution is typically carried out at room temperature. It is preferred that the total iridium concentration before step (iv) commences is from 10-30 g_{Ir} / L, preferably 15-25 g_{Ir} / L. The concentration of iridium is believed to be important in controlling the properties of the material formed in step (iv). For the avoidance of doubt, if 100 g iridium powder is used in step (ii) and 5L of DI is used in step (iii) then the iridium concentration is 20 g_{Ir} / L.

In an optional step carried out inbetween steps (iii) and (iv), the solution may be filtered to removed unreacted iridium particles.

### Acidification - step (iv)

The solution from step (iii) is acidified during which time a precipitate forms. Although the chemistry is not yet fully understood, pH control during the acidification step is thought to be important in preparing a catalyst with the correct properties. It is preferred that the pH is reduced gradually to within the range of pH 3.0 to 3.5. Precipitation can still be achieved when the pH is above 3.5, and even at alkaline pH, but the resulting product is more difficult to wash and impurities may therefore remain in the final product. Nitric acid is a preferred acid for pH adjustment. The precipitation produces a solid and a supernatant.

Once the pH has been reduced, the mixture is preferably diluted by addition of water, preferably DI water. It is preferred that the mixture is diluted to achieve an iridium concentration which is 40-60% of the original concentration. For example, if the iridium concentration prior to step (iv) was 20 g_{Ir} / L then the mixture is diluted to achieve an iridium concentration of 8-12 g_{Ir} / L.

### Filtration - step (v)

Following acidification, and optional dilution, the solid and supernatant are separated, preferably by filtration. The solid is washed with water, preferably DI, to remove soluble impurities.

### Drying - step (vi)

The filtered solid is then dried. The solid should be dried at a temperature of approximately 55 °C if the hydrate is desired. To obtain a dehydrated product a higher temperature should be used, preferably around 150 °C, e.g. 120-180 °C, such as 130-170 °C. The duration of the drying step will depend on the apparatus used and the scale, but the skilled person will be able to determine suitable conditions.

The material formed after step (vi) may be described as amorphous or poorly crystalline. If a more crystalline material is desired then the process may include an optional step of calcining the material to increase its crystallinity.

### Grinding

In an optional step the dried material is ground to the appropriate particle size. Any suitable grinding method may be used. The ground material is then sieved to the desired particle size fraction. The ground material is generally filtered using a series of sieves with the final sieve being US Mesh 200 (retaining sizes above 75 µm). Any oversized powder is returned to the grinding step.

### Incorporation into a catalyst-coated membrane

The process may include a subsequent step of incorporating the catalyst into a catalyst-coated membrane. A catalyst-coated membrane generally comprises a membrane having anode catalyst layer on a first face thereof and a cathode catalyst layer on a second face thereof.

The process may also include a subsequent step of incorporating the catalyst-coated membrane into a fuel cell or water electrolyser.

### Material

The catalyst produced by the method has an oxygen content that is higher than is expected for pure IrO₂. It is thought that the material includes at least some IrO(OH)₂, possibly in addition to IrO₂ and/or Ir₂O₃.

The material has a S_{BET} surface area of 10-40 m²/g when measured according to the method described in the experimental section. It is preferred has the material has a S_{BET} surface area of 10-35 m²/g, preferably 10-30 m²/g, preferably 15-30 m²/g, 15-25 m²/g or 18-24 m²/g.

In some embodiments iridium metal may also be present, which can be identified by sharp peaks at 2θ = 41°, 47° and 83° in the XRD spectrum. Alternatively, the material may be free from iridium metal, which can be identified by the absence of sharp peaks at 2θ = 41°, 47° and 83°. As noted above, the presence of iridium metal can be avoided by filtering the solution between steps (iii) and (iv) in order to remove unreacted iridium particles, and/or by controlling the oxidation conditions in step (ii) so as to oxidize all of the iridium powder.

The catalyst typically contains at least 70 wt% iridium when measured by inductively coupled plasma mass spectrometry (ICP-MS), more typically at least 75 wt% iridium.

If appropriate materials are used to contain the mixture used in step (ii) then it is possible to produce an amorphous, low surface area OER catalyst with a low content of transition metal impurities. The content of the material according to the second aspect of the invention is 0-600 ppm when measured by inductively coupled plasma mass spectrometry (ICP-MS) analysis, preferably 0-500 ppm, such as 0-400 ppm, 0-300 ppm or 0-200 ppm. For demanding applications and where a particularly long life is required, it is preferred that the content of any individual transition metal other than iridium is 0-100 ppm.

In preferred embodiments the material has a content of any individual transition metal other than iridium which is 0-500 ppm, preferably 0-250 ppm. For the avoidance of doubt, the combined amount of transition metals, other than iridium, may be above 500 ppm. For demanding applications and where a particularly long life is required, it is preferred that the material has a content of any individual transition metal other than iridium which is 0-100 ppm.

It is preferred that the material has a largest particle size of ≤ 75 µm. This corresponds to material which passes through a US Mesh 200. This particle size is typically suitable for incorporation in a layer of a fuel cell or water electrolyser.

### Examples

### BET surface area

The sample was placed in a 3/8" diameter small bulb tube. The amount of sample was chosen so as to fill at least 1/3^{rd} of the bulb. and to give a surface area of and degassed at room temperature for 10 minutes followed by treatment at 300 °C for 1 h under N₂ flow, then allowed to cool down gradually under N₂ flow to room temperature. N₂ BET surface area was measured using a Micromeritics^{™} TriStar II Plus instrument.

### XRD

XRD analysis was carried out using a Bruker D8 Advance Davinci diffractometer with a Lynxeye-XE PSD detector with 0.0125° Ni Filter. The analysis was carried out an ambient temperature using Cu Kα (λ = 1.5406 + 1.54439 Å) radiation. Phase identification was carried out using Bruker AXS Diffrac EVA V5 (2010-2018) software and the PDF-4+ database (2020 release).

### Impurities content

The content of impurities was measured by inductively coupled plasma mass spectrometry (ICP-MS) using an Agilent 725 ICP-OES instrument.

### Example 1

indium powder (300 g, 400 mesh corresponding to particle sizes below 23 µm) was combined with 900 g of sodium peroxide and the mixture roughly ground until well mixed. The mixture was transferred to a nickel crucible and heated by means of a natural gas flame (temperature approximately 500 °C) with mixing using a nickel rod to avoid clumping. Once the mixture showed signs of visible red heat heating was stopped and the mixture was allowed to cool for 60-90 minutes. Once cooled the mixture was dissolved in 14 L DI water and allowed to stir for 30 mins to ensure complete dissolution. Reagent grade nitric acid was added until the pH reduced to -3.25. Once the target pH was reached the mixture was diluted with 14L DI water, stirred then allowed to settle for 1 h. The solid was collected via a Buchner funnel equipped with vacuum pump and washed with 150 L DI water at 75 °C. The solid was collected and dried in trays in an oven at 150 °C for 10 h. The solid was ground and sieved through a series of sieves, the final sieve being US Mesh 200 (retaining sizes above 75 µm).

The XRD spectrum of the material is shown in Figure 1. Peaks at 2θ = 40, 44, 59 indicated the presence of unreacted iridium metal. A broad peak around 2θ = 33° indicated the presence of amorphous IrO₂.

The material had a S_{BET} of 22 m²/g. The residual iridium content was ~8%.

The material had a Ni content of 654 ppm.

### Example 2

indium powder (300 g) and sodium peroxide (900 g) were mixed in a pestle and mortar until the mix was visually homogeneous. It was then fed gradually to a continuous rotary calciner set to 450 °C. The inner surface of the rotary calciner was stainless steel. The rotation speed and incline were selected to achieved -60% conversion of the iridium metal. The solid was allowed to cool, then was dissolved, acidified and precipitated following the conditions used in example 1.

The product had a S_{BET} of 15.7 m²/g. The residual iridium content was ∼40%.

The highest levels of transition metal impurities were: Rh 87 ppm; Cr 86 ppm; Fe 61 ppm.

Example 2 demonstrates that by appropriate selection of the material used to contain the powder mixture in step (ii) it is possible to produce a product with very low transition metal contaminants.

## Claims

1. A process for preparing an iridium-based oxygen evolution reaction catalyst, comprising the steps of:
(i) combining iridium powder and a peroxide salt to produce a powder mixture;
(ii) carrying out thermal treatment on the powder mixture;
(iii) dissolving the product from (ii) in water to produce a solution;
(iv) reducing the pH of the solution from (iii) to affect a precipitation and form a solid and a supernatant;
(v) separating the solid from the supernatant; and
(vi) drying the solid.

2. A process according to claim 1, wherein the peroxide salt is sodium peroxide.

3. A process according to claim 1 or claim 2, wherein the iridium powder and peroxide salt are combined at a molar ratio of from 1 : 4 to 1 : 10.

4. A process according to any of claims 1 to 3, wherein the surface of any equipment which comes into contact with the powder mixture in step (ii) is a metal oxide or a stainless steel.

5. A process according to claim 4, wherein the surface of any equipment which comes into contact with the powder mixture in step (ii) is a chromium-nickel-molybdenum austenitic stainless steel.

6. A process according to any of claims 1 to 5, wherein step (ii) is carried out in a static oven, static furnace, belt furnace or rotary calciner.

7. A process according to any of claims 1 to 6, wherein the total iridium content in the solution formed in step (iv) is 10-30 g_{Ir} / L.

8. A process according to any of claims 1 to 7, wherein in step (iv) the pH is reduced using nitric acid.

9. A process according to any of claims 1 to 8, comprising a subsequent step of incorporating the catalyst into a catalyst-coated membrane.

10. A process according to claim 9, comprising a subsequent step of incorporating the catalyst-coated membrane into a fuel cell or water electrolyser.

11. An oxygen evolution reaction catalyst, wherein:
the catalyst exhibits a single maxima in its XRD spectrum in the region 2θ = 25-38°;
the catalyst has a BET surface area of 10-40 m²/g;
the content of any individual transition metal, other than iridium, is 0-600 ppm when measured by inductively coupled plasma mass spectrometry (ICP-MS).

12. A catalyst according to claim 11, wherein the catalyst is free from iridium metal.

13. A catalyst according to claim 11 or claim 12, wherein the catalyst has a largest particle size of ≤ 75 µm.

14. A catalyst coated membrane comprising an oxygen evolution reaction catalyst according to any of claims 11 to 13.

15. A fuel cell or a water electrolyser comprising a catalyst coated membrane according to claim 14.
